# EUROPEAN PATENT APPLICATION

(11) **EP 1 263 213 A1**
(43) Date of publication of application: **04.12.2002**
(21) Application number: 02002791.8
(22) Date of filing: 07.02.2002
(51) Int. Cl.: H04N 5/225

(54) **Imaging device and mobile terminal device using the same**

(30) Priority: 31.05.2001 JP 2001164008
(71) Applicant: MITSUBISHI DENKI KABUSHIKI KAISHA, Tokyo 100-8310 (JP)
(72) Inventor: Miyake, Hiroyuki, Chiyoda-ku, Tokyo 100-8310 (JP); Kuno, Tetsuya, Chiyoda-ku, Tokyo 100-8310 (JP); Sugiura, Hiroaki, Chiyoda-ku, Tokyo 100-8310 (JP); Ueda, Shinobu, Chiyoda-ku, Tokyo 100-8310 (JP); Minobe, Tadashi, Chiyoda-ku, Tokyo 100-8310 (JP)
(74) Representative: Popp, Eugen, Dr.

(57) **Abstract**

There are provided a first imaging lens and a second imaging lens whose image picking-up directions are different, a reflecting member for changing an optical path of an image picked up via one imaging lens such that image forming direction of the first imaging lens and the second imaging lens are set in a same direction, an imaging device having imaging surfaces on which images picked up via the first imaging lens and the second imaging lens are formed, a signal processing member for signal-processing an image signal that is converted into an electric signal by the imaging device, a display portion for displaying the image signal which is subjected to the signal processing by the signal processing member, and a selecting member for selecting the image signal corresponding to any one of the first imaging lens and the second imaging lens to display it on the display portion.

## Description

### BACKGROUND OF THE INVENTION

### [Technical Field]

The present invention relates to an imaging device for picking up the image in plural directions, and a mobile terminal device such as a mobile telephone, PDA (Personal Digital Assistant), etc. using the same.

### [Related Art]

In recent years, it is possible to execute the data communication of the character data, the image data, etc. with the progress of the information communication technology, etc. Thus, various mobile information terminal devices having the so-called imaging function are provided.

For example, in the Unexamined Japanese Patent Application Publication No. Hei8-223492, the camera built-in mobile imaging device in which the video taking device such as the video camera, or the like is provided is set forth, and the taking direction of the video camera can be changed by rotating the camera head portion. According to such imaging device, the taking direction of the video camera can be changed while holding the direction of the body case (casing), and thus the image can be picked up in plural directions while checking the image picking-up state displayed on the displaying member.

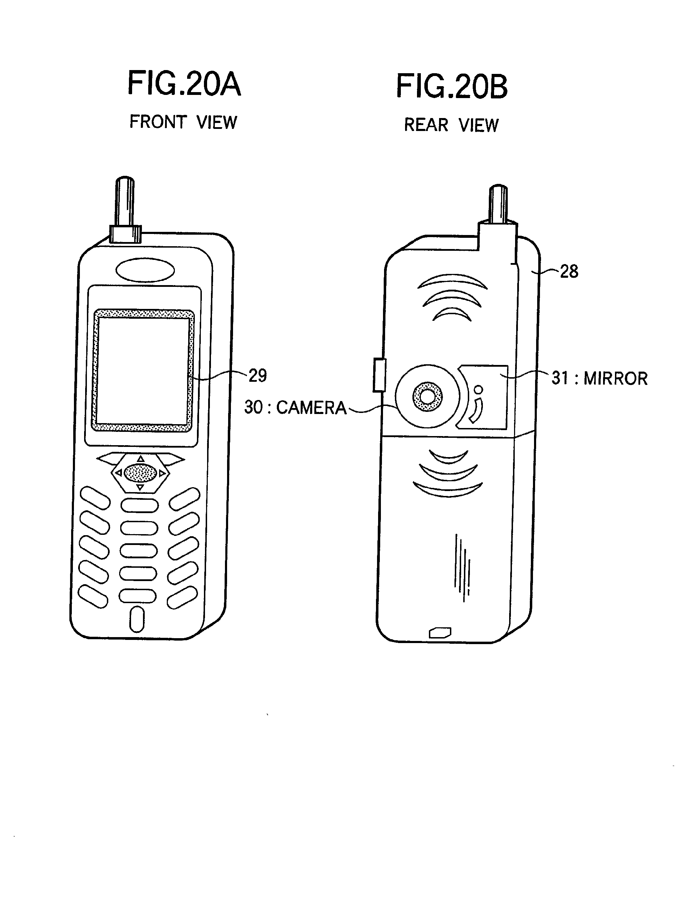

Also, FIGS.20A and 20B are perspective views showing the mobile telephone using the imaging device in the prior art. FIG.20A is a perspective view of the mobile telephone viewed from the front side, and FIG.20B is a perspective view of the mobile telephone viewed from the rear side. In FIGS.20A and 20B, 28 is a main body of the mobile telephone, 29 is a display portion, 30 is an imaging member, and 31 is a mirror member used when the image of the photographer himself or herself is picked up. In such mobile telephone, the miniaturization of the device can be achieved, but it is impossible to check the image picking-up state when the image of the photographer himself or herself is picked up. As a result, another subject checking member such as the mirror member 31, or the like is needed.

### [Problems to be solved]

Since the mobile imaging device in the prior art is constructed as above, the image can be picked up in plural directions while checking the image picking-up state of the subject, nevertheless there are the problems that the miniaturization of the device is difficult since a rotating mechanism for rotating the camera head portion must be provided and that an electrical connection structure becomes complicated since the electrical connection between the video camera and the mobile imaging device main body must be provided to the rotating mechanism for the camera head portion. There is further problem that, if such rotating mechanism is provided, the mechanical strength of the rotating mechanism becomes weak and thus mobile imaging device is destroyed or gets out of order even when the weak impact caused in the falling, etc., for example, is applied.

Also, in the mobile telephone shown in FIGS.20A and 20B in the prior art, it is possible to miniaturize the device since the rotating mechanism, etc. are not provided. However, another subject checking member such as the mirror member, or the like is needed. Thus, there are the problems that, according to such subject checking member, the image picking-up state by the imaging member cannot be precisely grasped to then execute the retake many times, and others.

The present invention has been made to overcome the above problems, it is an object of the present invention to provide a novel imaging device capable of picking up the image in plural directions without the rotating mechanism, etc. and displaying respective picked-up images clearly on the relatively small display portion, that is provided to the small electronic device such as the mobile telephone, etc., and also a novel mobile terminal device capable of picking up the image in plural directions by using this imaging device and achieving the miniaturization, etc. of the device.

### [Means for Solving the Problems]

An imaging device according to aspect 1 of the present invention comprises a first imaging lens and a second imaging lens whose image picking-up directions are different; a reflecting member for changing an optical path of an image picked up via one imaging lens such that image forming direction of the first imaging lens and the second imaging lens are set in a same direction; an imaging device having imaging surfaces on which images picked up via the first imaging lens and the second imaging lens are formed; a signal processing member for signal-processing an image signal that is converted into an electric signal by the imaging device; a display portion for displaying the image signal which is subjected to the signal processing by the signal processing member; and a selecting member for selecting the image signal corresponding to any one of the first imaging lens and the second imaging lens to display it on the display portion.

In the imaging device according to aspect 2 of the present invention, the selecting member selects the image signal to be displayed on the display portion by designating reading areas, that correspond to the first imaging lens and the second imaging lens, on the imaging surfaces.

An imaging device according to aspect 3 of the present invention comprises a first imaging lens and a second imaging lens whose image picking-up directions are different; a reflecting member for changing an optical path of an image picked up via one imaging lens such that image forming direction of the first imaging lens and the second imaging lens are set in a same direction; a holder for holding the first imaging lens and the second imaging lens and the reflecting member; an imaging device having imaging surfaces on which images picked up via the first imaging lens and the second imaging lens are formed; a signal processing member for signal-processing image signals of the first imaging lens and a second imaging lens, that are converted into electric signals by the imaging device; a display portion for displaying the image signals which are subjected to the signal processing by the signal processing member; and a moving member to which the holder is provided, for moving a position of the holder such that any one of images picked up via the first imaging lens and the second imaging lens is formed on an imaging surface of the imaging device.

In the imaging device according to aspect 4 of the present invention, a light shielding member for shielding optical paths of the first imaging lens and the second imaging lens is provided on the imaging surface.

In the imaging device according to aspect 5 of the present invention, an infrared cutting filter is provided between the first imaging lens and the second imaging lens and the imaging surfaces of the imaging element.

In the imaging device according to aspect 6 of the present invention, the reflecting member consists of a mirror or a prism.

A mobile terminal device according to aspect 7 of the present invention comprises a mobile terminal device main body having a display portion; a first imaging lens and a second imaging lens arranged on a front surface portion, on which the display portion is arranged, and a side surface portion of the mobile terminal device main body, for picking-up images positioned in mutually perpendicular directions; a reflecting member for reflecting an image picked up via the second imaging lens provided on the side surface portion to form the image in a same direction as the image picked up via the first imaging lens provided on the front surface portion; an imaging device having imaging surfaces on which images picked up via the first imaging lens and the second imaging lens are formed; a signal processing member for signal-processing an image signal that is converted into an electric signal by the imaging device; and a selecting member for selecting the image signal that is subjected to the signal processing member or a reading area on the imaging surface, that corresponds to the first imaging lens or the second imaging lens, to display any one of images picked up via the first imaging lens and the second imaging lens on the display portion.

A mobile terminal device according to aspect 8 of the present invention comprises a mobile terminal device main body having a display portion; a first imaging lens and a second imaging lens arranged on a front surface portion, on which the display portion is arranged, and a side surface portion of the mobile terminal device main body, for picking-up images positioned in mutually perpendicular directions; a holder for holding the first imaging lens and the second imaging lens; an imaging device having imaging surfaces on which images picked up via the first imaging lens and the second imaging lens are formed; a signal processing member for signal-processing image signals of the first imaging lens and a second imaging lens, that are converted into electric signals by the imaging device; a display portion for displaying the image signals which are subjected to signal processing by the signal processing member; and a moving member to which the holder is provided, for moving a position of the holder such that any one of images picked up via the first imaging lens and the second imaging lens is formed on an imaging surface of the imaging device.

In the mobile terminal device according to aspect 9 of the present invention, a light emitting member for emitting a light in an imaging direction of the second imaging lens is provided, and an operating member for causing the light emitting member to emit a light when the image is picked up via the second imaging lens is provided.

In the mobile terminal device according to aspect 10 of the present invention, an imaging angle of view of the first imaging lens is set wider than an imaging angle of view of the second imaging lens.

In the mobile terminal device according to aspect 11 of the present invention, a transmitting/receiving member for transmitting/receiving the image signal, that is subjected to signal processing by the signal processing member, to other device via a radio transmission is provided.

### BRIEF DESCRIPTION OF THE DRAWINGS

[FIG.1] Fig. 1 is a block diagram showing a configuration of an imaging device according to Embodiment 1 of the present invention.
[FIG.2] Fig. 2 is a sectional view showing a concrete configuration of the imaging device according to Embodiment 1 of the present invention.
[FIG.3] Fig. 3 is a view showing a positional relationship, etc. between respective images formed on an imaging surface 4e of an imaging element 4 shown in FIG.1 and FIG.2.
[FIG.4] Fig. 4 is a view showing a positional relationship, etc. between respective images formed on the imaging surface 4e of the imaging element 4 when a light shielding member is not provided in FIG.3.
[FIG.5] Fig. 5 is a sectional view showing another example of the configuration of the imaging device according to Embodiment 1 of the present invention.
[FIG.6] Fig. 6 is a sectional view showing still another example of the configuration of the imaging device according to Embodiment 1 of the present invention.
[FIG.7] Fig. 7 is a sectional view showing yet still another example of the configuration of the imaging device according to Embodiment 1 of the present invention.
[FIG.8] Fig. 8 is a perspective view showing an external appearance of a mobile terminal device according to Embodiment 2 of the present invention.
[FIG.9] Fig. 9 is a view showing schematically an arrangement relationship of an imaging device employed in the mobile terminal device shown in FIG.8.
[FIG.10] Figs. 10A and 10B are views showing used states of the mobile terminal device shown in FIG.8 and FIG.9.
[FIG.11] Fig. 11 is a perspective view showing an external appearance of a mobile terminal device according to Embodiment 3 of the present invention.
[FIG.12] Fig. 12 is a block diagram showing a configuration of an imaging device applied to the mobile terminal device according to Embodiment 3 of the present invention.
[FIG. 13] Figs. 13A and 13B are views showing used states of the mobile terminal device shown in FIG.11 and FIG.12.
[FIG.14] Fig. 14 is a block diagram showing a configuration of an imaging device according to Embodiment 4 of the present invention.
[FIG.15] Figs. 15A and 15B are perspective views showing an external appearance of the imaging device shown in FIG.14.
[FIG. 16] Fig. 16 is a view showing schematically an arrangement relationship of an imaging device employed in the mobile terminal device according to Embodiment 4 of the present invention.
[FIG.17] Fig. 17 is a block diagram showing a configuration of an imaging device according to Embodiment 5 of the present invention.
[FIG.18] Fig. 18 is a perspective view showing an external appearance of a mobile terminal device according to Embodiment 6 of the present invention and a positional relationship to the user.
[FIG.19] Figs. 19A and 19B are views showing used states of the mobile terminal device shown in FIG.18.
[FIG.20] Figs. 20A and 20B are a front view and a rear view showing a mobile terminal device in the prior art.

### DETAILED DESCRIPTION OF THE PREFERRED EMBODIMENTS

### [Embodiments of the Invention]

### (Embodiment 1)

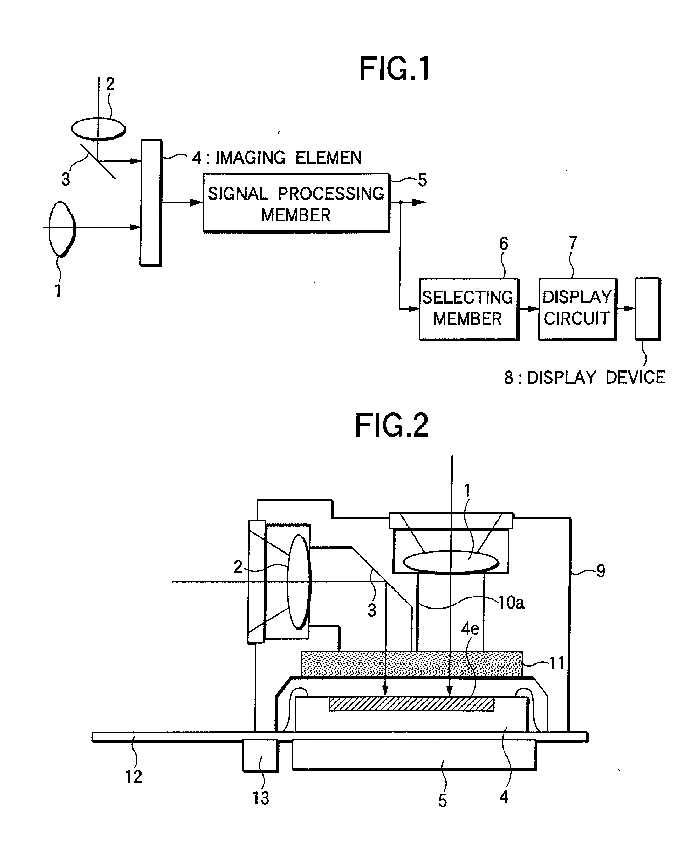

An embodiment 1 of the present invention will be explained with reference to FIG.1 to FIG.7 hereunder. FIG.1 is a block diagram showing a configuration of an imaging device according to the embodiment 1. FIG.2 is a sectional view showing a concrete configuration of the imaging device according to the embodiment 1. In FIG.1 and FIG.2, 1 is a first imaging lens; 2, a second imaging lens; 3, a reflecting member for changing the image forming direction of the optical image picked up via the second imaging lens 2; 4, an imaging device having an imaging surface 4e on which the optical image picked up via the first and second imaging lenses 1, 2 (referred simply to as the "image" hereinafter) is formed; 5, a signal processing member for processing the image signal that is converted into an electric signal by the imaging element 4; 6, a selecting member for selecting the image signal, that corresponds to any image picked up via the first and second imaging lenses, from the image signals, that are subjected to the signal processing by the signal processing member 5, to output it; 7, a display circuit for converting the image signal selected by the selecting member 6 into a display signal that satisfies a display format of a display portion and then displaying it; and 8, a display portion consisting of a display device such as the liquid crystal monitor, etc. A display member is constructed by the display circuit 7 and the display portion 8.

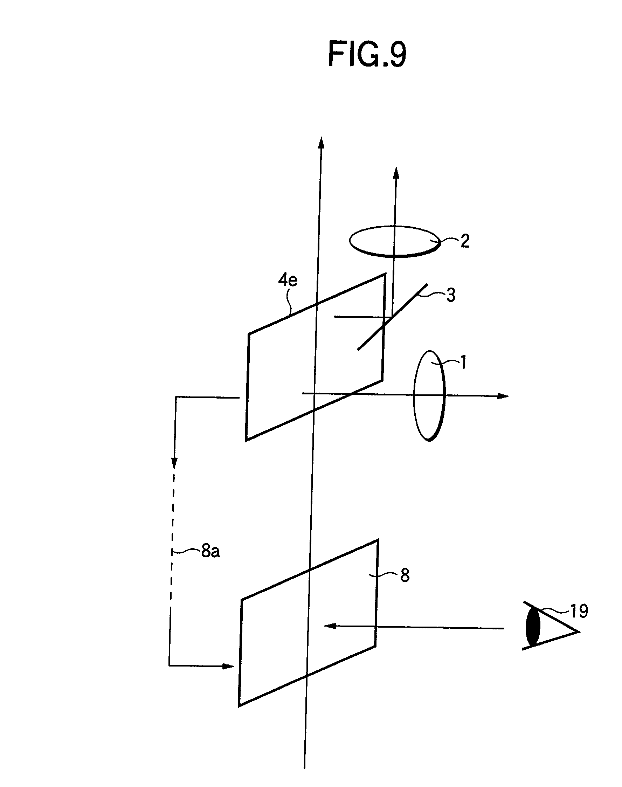

Also, in FIG.2, 9, a holder for holding the first imaging lens 1, the second imaging lens 2, and the reflecting member 3 at predetermined positions; 10, a light shielding member provided to the holder 9, for shielding optical paths of the image picked up via the first imaging lens 1 and the image picked up via the second imaging lens 2 not to interfere optically with each other; 11, a sensitivity characteristic correction filter such as an infrared cutting filter, or the like provided on the optical paths of the images image picked up via the first and second imaging lenses 1, 2, for removing an unnecessary infrared component from the image to be formed on the imaging surface 4e of the imaging element 4; 12, a substrate such as a printed board on a surface of which wiring patterns, etc. are formed and also the imaging element 4, the signal processing member 5, the holder 9, and the like are mounted; and 13, is an electronic parts such as a capacitor, a resistor, etc. mounted an a rear surface side of the substrate 12. In the imaging device of the present embodiment, the signal processing member 5 is formed on a chip as IC (Integrated Circuit), for example, and mounted at the position opposing to the imaging element 4 via the substrate 12. But such configuration is not always needed, and the similar advantage can be achieved by providing the signal processing member 5 at any place in the device.

Also, as shown in FIG.2, the first imaging lens 1 and the second imaging lens 2 are arranged such that their optical axis directions intersect orthogonally with each other or intersect substantially orthogonally with each other. The imaging devices must be provided to respond to the first imaging lens 1 and the second imaging lens 2. But the size of the imaging device is increased if the imaging device is provided every imaging lens. Therefore, in the imaging device according to the present embodiment, the reduction in the size of the device is attained by the configuration that permits respective images picked up via the first imaging lens 1 and the second imaging lens 2 to be formed on the imaging surface 4e of one imaging element 4 by using the reflecting member 3.

Next, an operation will be explained hereunder. The image of the subject, which is positioned in the normal direction or the substantially normal direction with respect to the imaging surface 4e of the imaging element 4, is picked up via the first imaging lens 1 and then formed on the imaging surface 4e of the imaging element 4. Also, the image of the subject, which is positioned in the parallel direction or the substantially parallel direction to the imaging surface 4e of the imaging element 4, is picked up via the second imaging lens 2 and then formed on the imaging surface 4e of the imaging element 4 via the reflecting member 3. In this manner, the images positioned in plural directions that are perpendicular directions or substantially perpendicular directions (referred to as the "perpendicular directions" hereinafter) mutually can be formed on the imaging surface 4e of the imaging element 4 respectively. At that time, since the light shielding member 10 is provided between the optical path of the first imaging lens 1 and the optical path of the second imaging lens 2, the images picked up via the first imaging lens 1 and the second imaging lens 2 can be formed on the imaging surface 4e of the imaging element 4 respectively in the situation that their mutual optical interference is suppressed.

The sensitivity characteristic correction filter 11 such as the infrared cutting filter, or the like is provided between the imaging element 4 and the holder 9, i.e., on respective optical paths of the first imaging lens 1 and the second imaging lens 2. Therefore, the transmission of the light in the infrared range, that is input via the first imaging lens 1 and the second imaging lens 2, is prevented and thus the spectral sensitivity characteristic of the imaging element 4 can be set close to the spectral sensitivity characteristic of the human being.

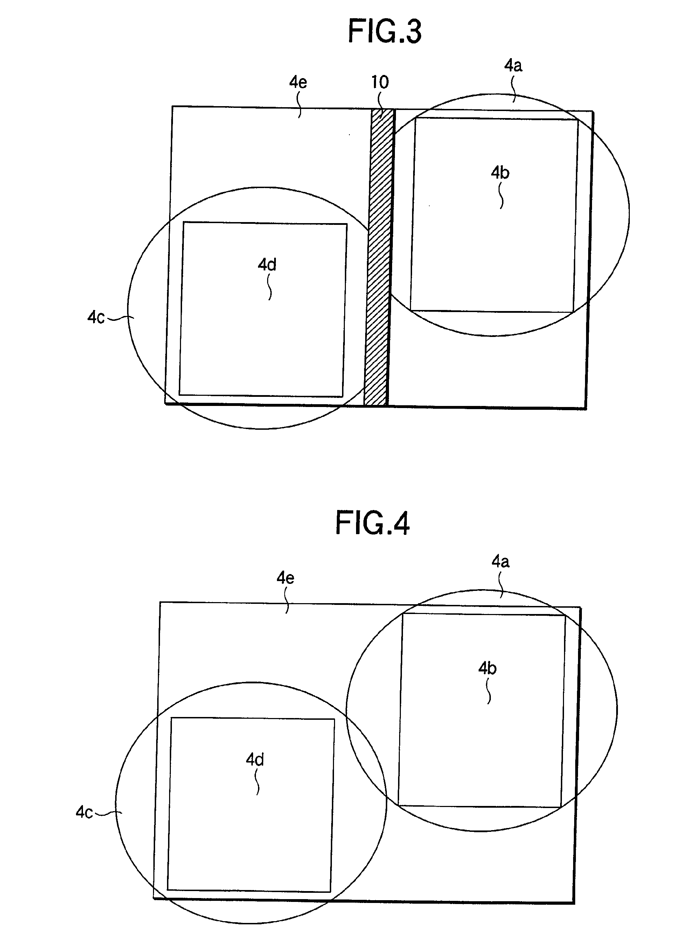

Here, positions of respective images formed on an imaging surface 4e of an imaging element 4 and positional relationships among them, etc. will be explained with reference to FIG.3 to FIG.4 hereunder. FIG.3 is a view showing a positional relationship, etc. between respective images formed on the imaging surface 4e of the imaging element 4. FIG.4 is a view showing a positional relationship, etc. between respective images when a light shielding member 10 is not provided in the imaging device shown in FIG.2. In FIG.3 and FIG.4, 4a is a first image picked up via the first imaging lens 1 and formed on the imaging surface 4e, and 4c is a second image picked up via the second imaging lens 2 and formed on the imaging surface 4e. These first and second images are formed at mutually remote positions of the imaging surface 4e respectively. That is, two images are formed on the common imaging surface 4e of one imaging element 4. Also, 4b and 4d are image reading areas provided on the imaging surface 4e (first and second imaging surfaces). The images, which are formed in the image reading areas, out of the images formed on the imaging surface 4e are converted into electric signals. In other words, photo diodes, etc. for performing the photoelectric conversion are arranged as pixels in an array fashion (not shown) on the imaging surface 4e, so that the images formed on the first and second imaging surfaces, i.e., the image reading areas 4b and 4d are converted into the electric signal.

These image reading areas 4b and 4d are set to fit for the display mode of the display portion 8, and the overall images read by the image reading areas 4b and 4d are displayed on the display portion 8 respectively. That is, in case the picked-up subject is displayed or recorded as the image, normally the image may be formed as a rectangle (for example, an aspect ratio is 3:4 in the case of the NTSC system TV) and portions, that are located in the image reading areas 4b and 4d, out of the images 4a and 4c picked up via the first imaging lens 1 and the second imaging lens 2 are employed as the picked-up images.

As shown in FIG.3, if the light shielding member 10 is provided, the optical paths of peripheral edge portions of the images picked up via the first imaging lens 1 and the second imaging lens 2 are shielded by the light shielding member 10 respectively. Therefore, the overlapped portion of the first and second images is not caused on the imaging surface 4e and thus the image reading areas 4b and 4d can be set wider. If the reading areas are set wide in this manner, the resolution of the image displayed on the display portion 8 can be improved, so that it is possible to display the images more clearly. Also, as shown in FIG.4, unless the light shielding member 10 is provided, the peripheral edge portions of the first and second images formed on the imaging surface 4e are overlapped mutually. In this case, since it is the images on the image reading areas 4b and 4d that are actually employed to display the images, the mutual overlapping of the images does not appear when the images are watched. In addition, if an imaging optical system which can dim sufficiently out areas other than image forming circles and form the image of the subject, is employed and also the image reading areas 4b and 4d are set to the size that is not affected by the interference, it is possible to eliminate the influence of such overlapping when the picked-up image is monitored on the display portion 8.

The so-called image signal that is converted into the electric signal by the imaging element 4 to output is input into the signal processing member 5 and is subjected to various signal processings. In the signal processing member 5, the signal processing necessary for the imaging device is applied to the electric signal that is output from the imaging element 4 and corresponds to one screen of the imaging area. More particularly, processes such as the CDS (Correlated Double Sampling), the gamma correction, the gain adjustment, etc., and also the reversal processing for restoring the image that is inverted laterally or vertically by the reflecting member 3 into the original state, etc. may be listed. In this case, other signal processings such as the white balance, the color matrix process, etc. may be listed according to the imaging device. Here, the "signal processing" signifies such signal processings, without distinction of the details, that can process the electric signal output from the imaging element 4 and convert it into the image signal that is required to output the picked-up image of the subject to the display member. Then, the image signal that is subjected to the signal processing in the signal processing member 5 is output to the selecting member 6.

The selecting member 6 is such a circuit that selects the image signal corresponding to any one of the first image 4a and the second image 4c, which are formed on the imaging surface 4e of the imaging element 4, and then outputs it to the display circuit 7. The selecting member 6 selects the image signal, which is to be displayed on the display portion 8, from the image signals that are subjected to the signal processing in the signal processing member 5, and then outputs it to the display circuit 7. In other words, the image signals that correspond to the positions of the first and second imaging surfaces (the image reading areas 4b and 4d) are extracted from the image signals that are read out from the imaging element 4 for all the areas, and then are output to the display circuit 7.

In the imaging device according to the present embodiment, the selecting circuit for selecting the image signals, that are to be displayed on the display portion 8, from the image signals, that are subjected to the signal processings in the signal processing member 5, is provided as the selecting member 6. Other selecting method may be applied. For example, in the case that the imaging element 4 is composed of the CMOS sensor which is XY-addressable, etc., the image signals in the particular areas, that correspond to the positions of the image reading areas 4b and 4d, can be selected by outputting previously the address values to the XY addresses in the CMOS sensor from the addressing member (e.g., the operating portion, etc. of the mobile terminal device described later) such that the signals are output only from the pixels of the imaging element 4, that correspond to the areas of the image reading areas 4b and 4d, and then only the image signals selected from the particular areas can be output to the signal processing member 5. In this case, the circuit that is equivalent to the selecting member 6 shown in FIG.1 can be neglected.

The display circuit 7 displays the images that are picked up via the first imaging lens 1 and the second imaging lens 2 on the display portion 8 based on the image signals selected by the selecting member 6. More particularly, the display circuit 7 drives the display portion 8 to display the image in response to the input image signal. As a result, any one of image signals picked up via the first imaging lens 1 and the second imaging lens 2 can be displayed on the overall display screen of the display portion 8, the images picked up via the first imaging lens 1 and the second imaging lens 2 in plural directions can be displayed on the display portion 8, and the images can be displayed clearly on the relatively small display portions, etc. provided to the small electronic devices such as the mobile telephone, etc.

As described above, according to the imaging device of the present embodiment, there are provided a first imaging lens and a second imaging lens for picking up images in mutually perpendicular directions, a reflecting member for reflecting the image picked up via one imaging lens of the first and the second imaging lenses to form the image in the same direction as the image picked up via the other imaging lens, an imaging element having first and second imaging surfaces that form the images picked up via the first imaging lens and the second imaging lens respectively to respond to the first imaging lens and a second imaging lens, a signal processing member for applying the signal processing to the image signal that is converted into the electric signal by the imaging element, a display portion for displaying the image signal which is subjected to the signal processing by the signal processing member, and a selecting member for selecting any one of the image signals on the first and second imaging surfaces to display it on the display portion. Therefore, it is possible to get the imaging device that is able to pick up a plurality of images, which are positioned in mutually perpendicular directions, without the provision of the rotating mechanism, etc.

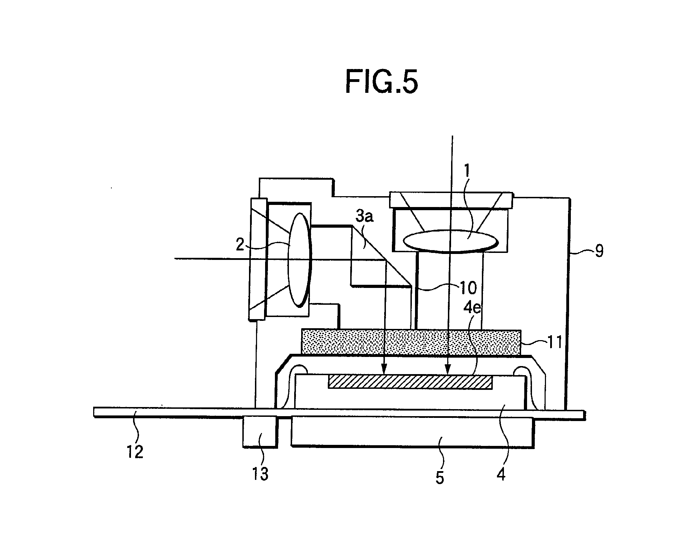

In this case, in the imaging device shown in FIG.2, the mirror is employed as the reflecting member 3, but such reflecting member may be constructed by other member. FIG.5 is a sectional view showing another example of the configuration of the imaging device according to the embodiment 1. In FIG.5, 3a is a triangular prism constituting the reflecting member. In FIG. 5, the same symbols denote the same or equivalent portions. As shown in FIG.5, even if the triangular prism is employed, the similar advantages to the imaging device shown in FIG.2 can be achieved.

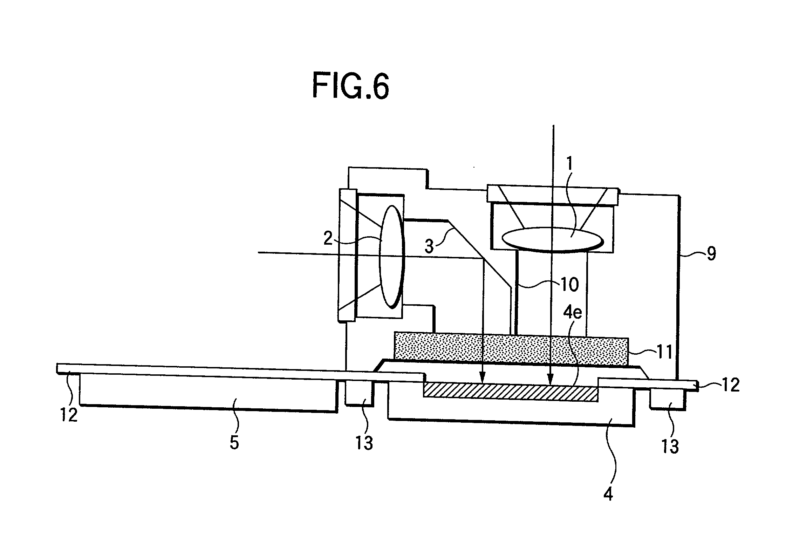

Also, in the imaging device shown in FIG.2, the imaging element 4 is provided on the surface side of the substrate 12, i.e., the surface on which the first and second imaging lenses 1, 2, but the imaging element 4 may be arranged on the back surface side of the substrate 12. FIG.6 is a sectional view showing still another example of the configuration of the imaging device according to the embodiment 1. In this example, the first and second imaging lenses 1, 2 and the imaging element 4 are arranged to put the substrate 12 between them. Therefore, an opening portion is provided in the substrate 12, and the imaging element 4 is bump-mounted on the back surface side of the substrate 12 to expose the imaging surface 4e from the opening portion. Accordingly, the reduction in size of the device can be achieved and also the images picked up via the first imaging lens 1 and the second imaging lens 2 can be formed on the imaging surface 4e of the imaging element 4.

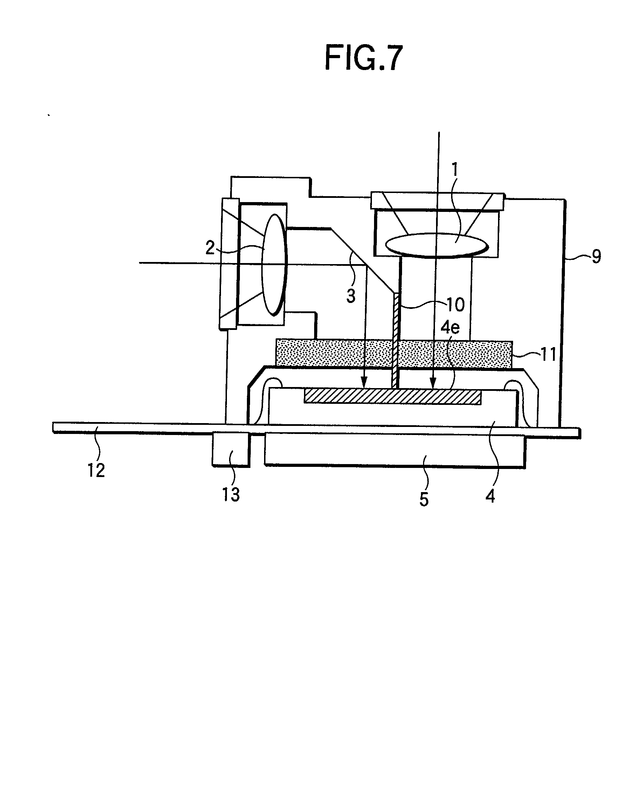

Also, in the imaging device shown in FIG.2, the infrared cutting filter 11 is provided onto the imaging surface 4e of the imaging element 4, and the light shielding member 10 is provided close to the surface of the infrared cutting filter 11. In this case, the light shielding member 10 may be provided close to the imaging surface 4e of the imaging element 4. FIG.7 is a sectional view showing yet still another example of the configuration of the imaging device according to the embodiment 1. In this example, since the light shielding member 10 is provided to extend to the imaging surface 4e of the imaging element 4, the optical path of the image picked up via the first imaging lens 1 and the optical path of the image picked up via the second imaging lens 2 can be light-shielded close to the surface of the imaging surface 4e. Accordingly, even if the imaging optical system which has small reduction in a quantity of peripheral light of the optical image is employed, the interference of the images picked up via the first imaging lens 1 and the second imaging lens 2 can be prevented and thus the good image can be displayed.

In this case, the mirror is employed as the reflecting member 3 in FIG.7, but the triangular prism may be employed. Also, if the triangular prism is applied to the imaging device having the configuration in which the imaging element 4 shown in FIG.6 is bump-mounted, the similar advantages can be achieved.

### (Embodiment 2)

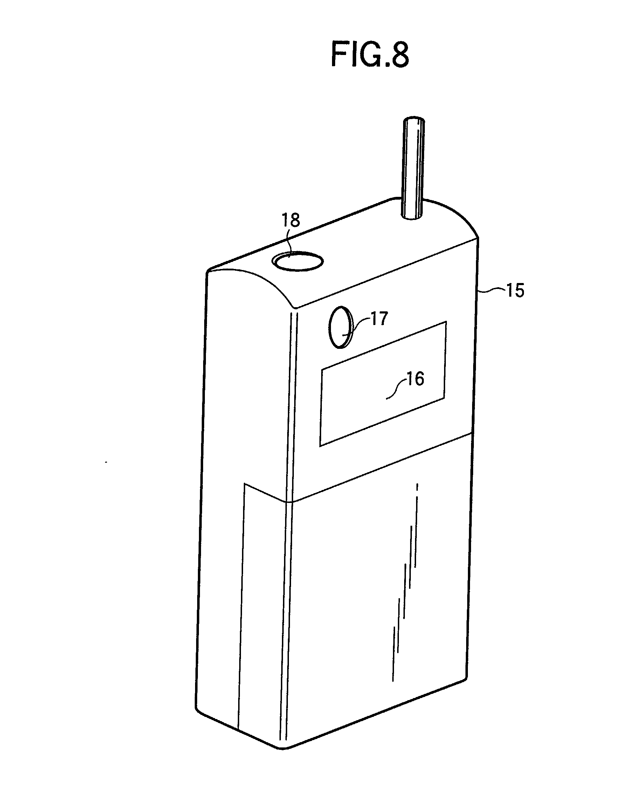

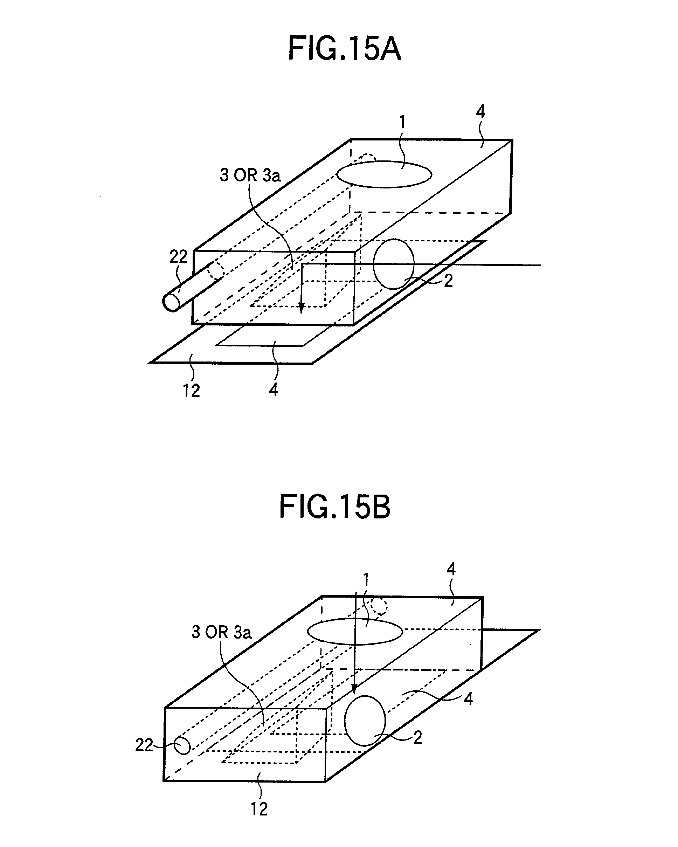

Next, a mobile terminal device according to an embodiment 2 of the present invention will be explained with reference to FIG.8, FIG.9 and FIGS.10A and 10B hereunder. FIG.8 is a perspective view showing an external appearance of a mobile terminal device according to the embodiment 2. FIG. 9 is a view showing schematically an arrangement relationship of an imaging device employed in the mobile terminal device shown in FIG. 8. The mobile terminal device according to the present embodiment is the mobile terminal device using the imaging device according to the above embodiment 1 and shows an imaging device built-in mobile terminal device, for example. In FIG.8, 15 is a main body of the mobile terminal device having the imaging device according to the above embodiment 1 and a transmitting/ receiving member for the voice communication, the data communication, etc. therein; 16, a transparent protection cover for protecting the display portion 8 of an imaging device 14; 17, a transparent protection cover for protecting the first imaging lens 1 of the imaging device 14; and 18, a transparent protection cover for protecting the second imaging lens 2 of the imaging device 14. The display portion 8, the first imaging lens 1, and the second imaging lens 2 are positioned on the back sides of transparent protection covers 16, 17, 18 respectively.

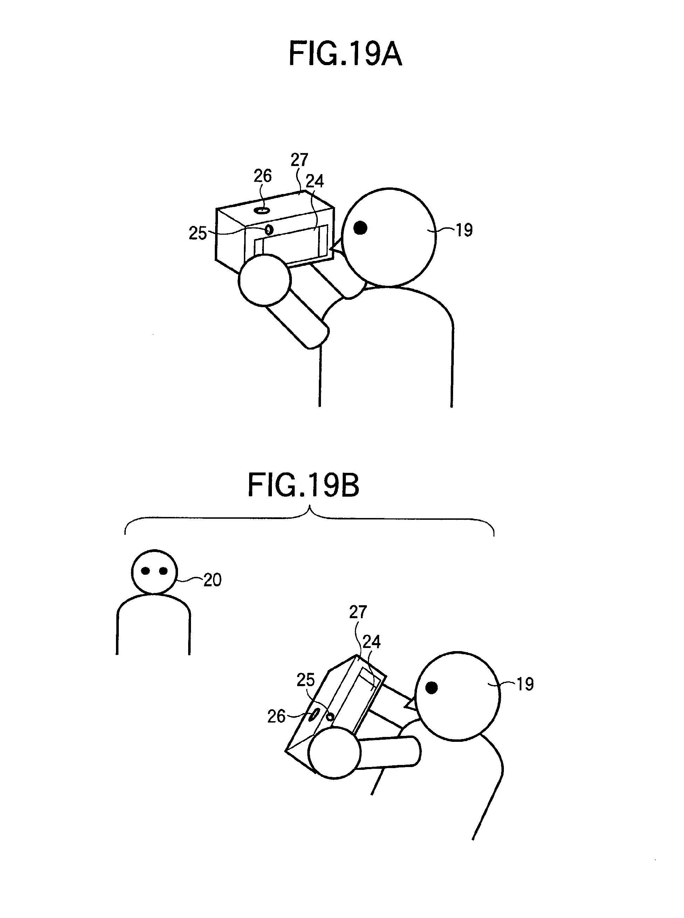

Also, in FIG.9, 19 is a person who picks up the image by the mobile terminal device according to the embodiment 1 (referred simply to as the "user" hereinafter), and the state that the user 19 looks at the display portion 8 with the eye is shown. 8a shows a flow of the image signal from the imaging element 4 to the display portion 8. As shown in FIG.9, the first imaging lens 1 is arranged such that its optical axis direction is directed in the same direction as the display direction of the display portion 8, and the second imaging lens 2 is arranged such that its optical axis direction is directed in the direction perpendicular or substantially perpendicular to the optical axis direction of the first imaging lens 1. Also, both the imaging element 4 and the display portion 8 have a flat structure, and the imaging surface 4e and the display screen are directed in the same direction. In FIG.9, the same symbols denote the same or equivalent portions, and thus the detailed explanation about them will be omitted.

Then, if the user 19 of the mobile terminal device according to the present embodiment picks up the image of the user himself or herself, the image is picked up via the first imaging lens 1. In this case, the user 19 selects either the image picked up via the first imaging lens 1 or the image picked up via the second imaging lens 2. Normally the mobile terminal device such as the mobile telephone, etc. has an operating portion (not shown) such as dial keys, etc. by which the external input is input, and, for example, anyone of the images picked up via the first imaging lens 1 and the second imaging lens 2 is selected by the operation signal that is externally input from this operating portion. The operating signal issued from the operating portion is input into the selecting member 6 or the imaging element 4 as the selecting signal for selecting member 6 or the address signal for the imaging element 4, and thus the image picked up via the first imaging lens 1 is selected.

If the image picked up via the first imaging lens 1 is selected according to the selection by the user 19, the first image picked up via the first imaging lens 1 is selected from the first and second images formed on the imaging surface 4e of the imaging element 4 by the selecting member 6 and then displayed on the display portion 8. Accordingly, the user 19 can pick up the image of the user 19 himself or herself while checking the image picking-up state of the user 19 displayed on the display portion 8. This is true of the case where the user 19 picks up the imaging object other than the user. In this case, the image picked up via the second imaging lens 2 is also selected according to the external signal issued from the operating portion, etc.

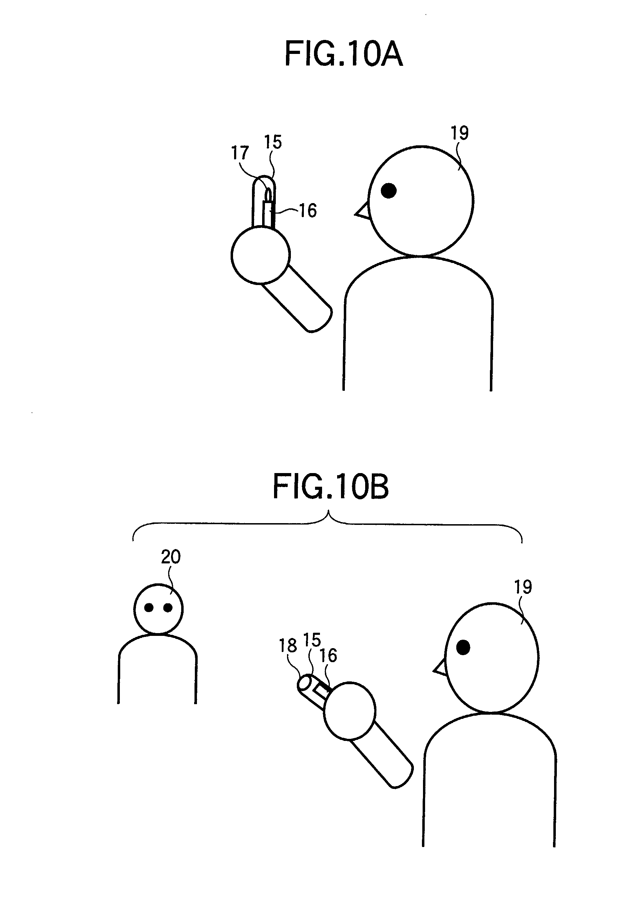

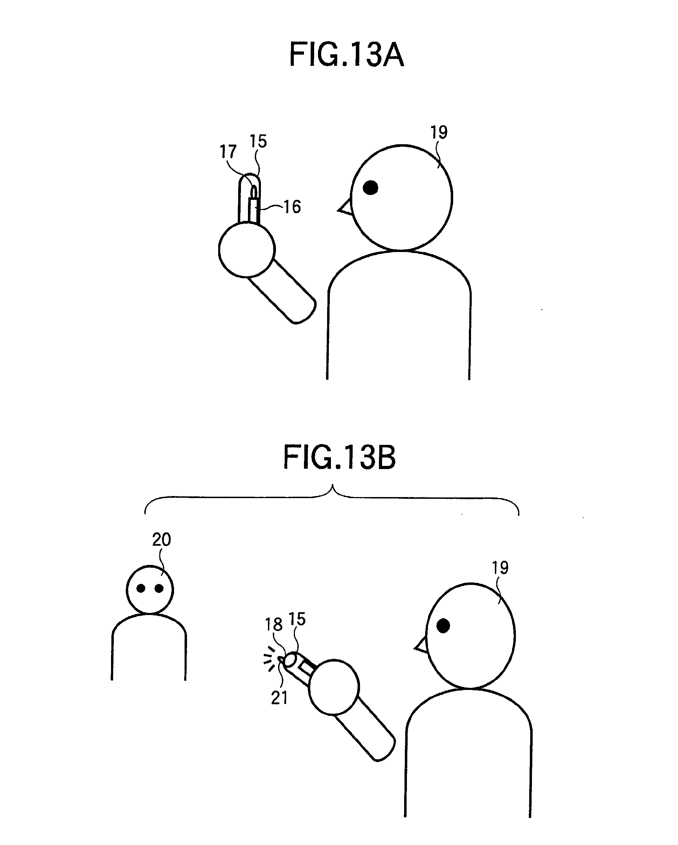

FIGS.10A and 10B are views showing used states of the mobile terminal device according to the embodiment 2, wherein FIG.10A shows the used state when the image of the user 19 himself or herself is picked up and FIG. 13B shows the used state when the subject other than the user 19, more particularly the subject at a position remote from the user 19 himself or herself, is picked up. As shown in FIG.10B, if the user 19 picks up the subject 20 other than the user 19, the plane of the mobile terminal device 14 on which the transparent protection cover 18 is provided is directed to the subject 20, and then the image of the subject 20 is picked up via the second imaging lens 2 arranged in the inside. In this case, the second image picked up via the second imaging lens 2 is selected from the first and second images formed on the imaging surface 4e of the imaging element 4 by the selecting member 6 and then displayed on the display portion 8. Accordingly, the user 19 can pick up the image while checking the state of the subject 20 displayed on the display portion 8.

In recent years, in order to lower the consumption power and improve the visibility, the reflective liquid crystal device (or the reflective LCD) is employed in most cases as the display element provided to the mobile telephone, PDA, etc. Since the reflective liquid crystal device displays the image by utilizing the reflected light of the incident quantity of light, the brightness of the display screen is also changed in response to the brightness of the incident quantity of light. Thus, the lighter the incident quantity of light, the lighter the display screen. As a result, since the display screen becomes dark in the dark place, the visibility of the screen is degraded. In order to overcome this problem, some reflective liquid crystal device has a light for illuminating the device per se. But such reflective liquid crystal device is not preferable in practical use since the consumption power is increased.

In contrast, in the mobile terminal device according to this embodiment 2, the image picking-up direction of the second imaging lens 2 is arranged in parallel or substantially parallel with the display screen of the display portion 8 provided to a mobile terminal device main body 15. Therefore, if the image is picked up via the second imaging lens 2, e.g., if the image of the subject 20 other than the user 19 is picked up, the front portion of the mobile terminal device main body 15 on which the display portion 8 is provided can be directed upward. Thus, the light from the illuminating member positioned over the user 19 and the subject 20 can be irradiated effectively onto the display screen of the display portion 8. Accordingly, in the case that the reflective liquid crystal device, or the like is employed as the display element, the visibility of the display screen can be improved without provision of other member such as the illuminating light, etc.

In the mobile terminal device shown in FIG.8, the second imaging lens 2 is arranged on the side portion of the upper area of the mobile terminal device main body 15, but the second imaging lens 2 may be arranged on other side portion. In this case, if the image formed on the imaging surface 4e of the imaging element 4 is displayed on the display portion 8 as it is, the image displayed on the display portion 8 is tilted by 90 degree with respect to the image picked up via the first imaging lens 1. Therefore, the process of rotating the image by 90 degree must be carried out in the signal processing portion 5, etc. As a result, even if the second imaging lens 2 is arranged on any side portion of the mobile terminal device main body 15, the similar advantages can be achieved. That is, if the image of the subject 20 is picked up via the first imaging lens 1, it is difficult for the user 19 to check the image picking-up state displayed on the display portion 8. In the mobile terminal device according to the embodiment 2, since the second imaging lens 2 is arranged on the side portion of the mobile terminal device main body 15, not only the image of the user 19 himself or herself but also the image of the subject 20 can be picked up while checking the image picking-up state displayed on the display portion 8.

Also, in the mobile terminal device according to the embodiment 2, difference is provided between an angle of view of the first imaging lens 1 and an angle of view of the second imaging lens 2 to pick up the image. In other words, the first imaging lens 1 is used to pick up the image of the user 19 himself or herself whereas the second imaging lens 2 is used to pick up the image of the subject 20 other than the user 19, e.g., the subject 20 at a remote position from the user 19, so that respective distances to the imaging objects are different. Therefore, the angle of view of the first imaging lens 1 to pick up the imaging object positioned at a relatively short distance is set wider than the angle of view of the second imaging lens 2. In this case, the reduction in the angle of view of the imaging lens can be facilitated as the distance from the imaging lens to the imaging element 4 becomes longer. Therefore, the back focal distance from the second imaging lens 2 to the imaging element 4 is set longer by arranging the reflecting member 3 on the optical path of the second imaging lens 2 which is used to pick up the image of the subject 20 at a remote position from the user 19.

In this manner, if the angle of view of the first imaging lens 1 is expanded to get the wide-angle imaging, the proper image can be picked up when the user 19 picks up the user's image. Normally, the distance from the imaging device to the imaging object is about 30 cm to 40 cm when the user 19 picks up the user's image, and at this time the angle of view of the first imaging lens 1 of 52 degree to 60 degree is fitted to take the bust shot (the image containing the portion from the breast to the face when mainly the human face is to be picked up) of the person. More particularly, the angle of view of the first imaging lens 1 is set based on these facts.

Also, if the image of the subject 20, etc. remote from the user 19 is picked up, it is natural that the distance from the imaging device to the subject becomes longer than the case where the image of the user 19 himself or herself is picked up. Similarly, if the bust shot is taken, the angle of view must be set narrower than the first imaging lens 1. For example, if the distance from 1 m to 3 m is assumed as the distance to the subject 20, the imaging angle of view of about 40 degree is suited to take the bust shot, so that the angle of view of the first imaging lens 1 can be set based on these facts. In this fashion, if the difference is provided between the angle of view of the first imaging lens 1 and the angle of view of the second imaging lens 2 and the angle of view of the first imaging lens 1 is set to the wider angle, the optimum imaging to meet the distance to the imaging object can be accomplished.

Since the above imaging angle of view only shows one example, the appropriate angle of view may be set in compliance with the size of the supposed imaging object. However, such a relationship is not changed that the imaging distance needed in the case where the image of the user 19 himself or herself is picked up is shorter than the imaging distance needed in the case where the image of the subject other than the user 19 is picked up. Therefore, the first imaging lens 1 used to pick up the image of the user 19 is arranged on the front portion of the mobile terminal device main body 15 on which the display portion 8 is arranged. Also, even if the image of the imaging object except the user 19 is picked up, the image can be picked up while checking the image picking-up state. Therefore, the second imaging lens 2 used to pick up the image of the subject 20, etc. located at the position remote from the user 19 is arranged on the side portion of the mobile terminal device main body 15, i.e., on the side portion of the mobile terminal device main body 15 perpendicular or substantially perpendicular to the display surface of the display portion 8 (the upper side portion of the mobile terminal device main body 15 in the case of the mobile terminal device according to the present embodiment), and also the reflecting member 3 is provided on the optical path of the second imaging lens 2 so as to prolong the distance from the second imaging lens 2 to the imaging element 4.

The transmitting/receiving member for making possible the transmission/reception of the voice signal and the data signal via the radio communication is provided to the mobile telephone, etc. Therefore, the image picked up by the mobile terminal device according to the present embodiment can also be displayed on other similar device, etc. by transmitting the image signal by virtue of the transmitting/ receiving member, which makes it possible for the person who is not there to check the image picking-up state.

### (Embodiment 3)

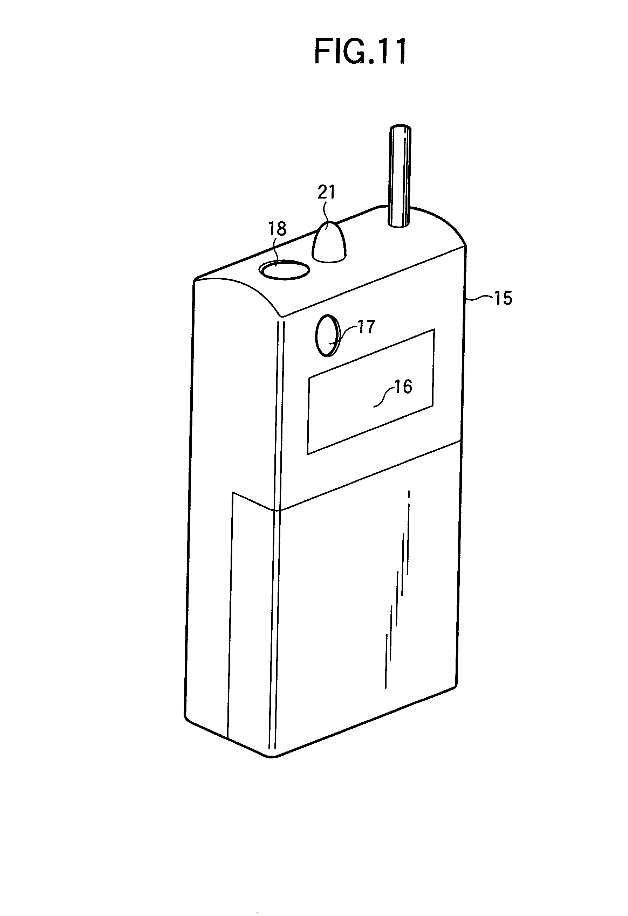

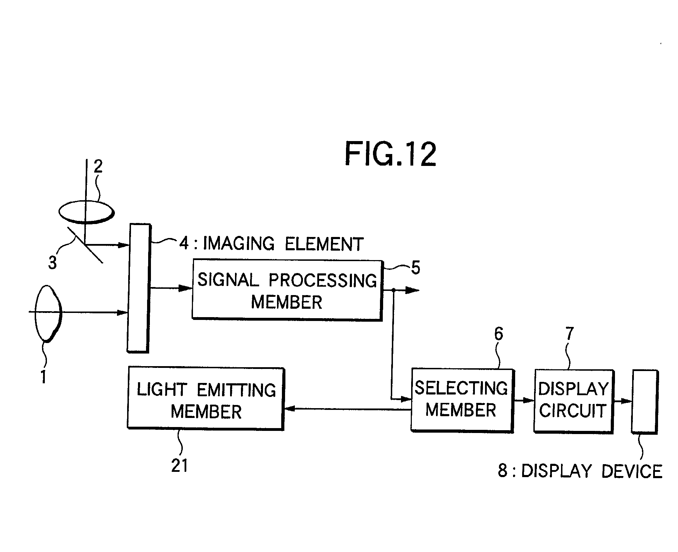

Next, a mobile terminal device according to an embodiment 3 of the present invention and an imaging device employed therein will be explained with reference to FIG.11, FIG.12, and FIGS.13A and 13B hereunder. FIG.11 is a perspective view showing an external appearance of a mobile terminal device according to the embodiment 3. FIG.12 is a block diagram showing a configuration of an imaging device employed in the mobile terminal device shown in FIG.11. The mobile terminal device according to the present embodiment further provides a member for informing the subject side of the imaging fact when the image of the imaging object except the user himself or herself is picked up. In FIG.11 and FIG.12, 21 is a light emitting member provided on the surface of the mobile terminal device main body 15 on which the second imaging lens 2 is arranged, for emitting the light when the image is picked up via the second imaging lens 2. The light emitting member 21 consists of a light emitting diode (LED), etc. A timing of the lighting of the light emitting member 21 is controlled in response to the selection of the imaging signal by the selecting member 6, for example. In FIG.9, the same symbols denote the same or equivalent portions and their detailed explanation will be omitted.

Next, an operation will be explained with reference to FIGS.13A and 13B hereunder. Assume that it can be decided by the member similar to that in the embodiment 2 which one of the images picked up via the first imaging lens 1 and the second imaging lens 2 should be selected. FIGS.13A and 13B are views showing used states of the mobile terminal device according to the embodiment 3, wherein FIG.13A shows the used state when the image of the user 19 himself or herself is picked up and FIG.13B shows the used state when the subject other than the user 19, more particularly the subject at a position remote from the user 19 himself or herself, is picked up. As shown in FIG.13B, if the user 19 picks up the subject 20 other than the user 19, the surface on which the transparent protection cover 18 and the light emitting member 21 are provided is directed to the subject 20 and then the image of the subject 20 is picked up via the second imaging lens 2 arranged in the inside of the transparent protection cover 18.

At that time, the selecting member 6 selects the image signal of the image picked up via the second imaging lens 2 and then outputs it to the display portion, and also outputs the control signal to the light emitting member 21 based on the selection of the image signal and causes the light emitting member 21 to emit the light. Accordingly, if the image is picked up via the second imaging lens 2, the light emitting member 21 emits the light. Also, if the image is picked up via the first imaging lens 1, the selecting member 6 selects the image signal of the image picked up via the first imaging lens 1. Therefore, the control signal is not output to the light emitting member 21 and thus the light emitting member 21 does not emit the light. Accordingly, it is possible to cause the light emitting member 21 to emit the light only when the image is picked up via the second imaging lens 2, and the image picking-up state in the mobile terminal device can be checked from the outside. In addition, the person who is the imaging object is informed of the fact that his or her image is being picked up, and thus it is possible to avoid such a state that the image of the person who is the subject 20 is reluctantly picked up.

In the mobile terminal device according to the present embodiment, the selecting member 6 performs a role of the operating member for causing the light emitting member 21 to emit the light. As described above, since normally the mobile terminal device such as the mobile telephone, etc. has the operating portion (not shown) such as the dial keys, etc. by which the external input can be input, the lighting of the light emitting member 21 may be controlled by the operating signal input externally from this operating portion, for example. In this case, the operating portion performs the function of the operating member.

### (Embodiment 4)

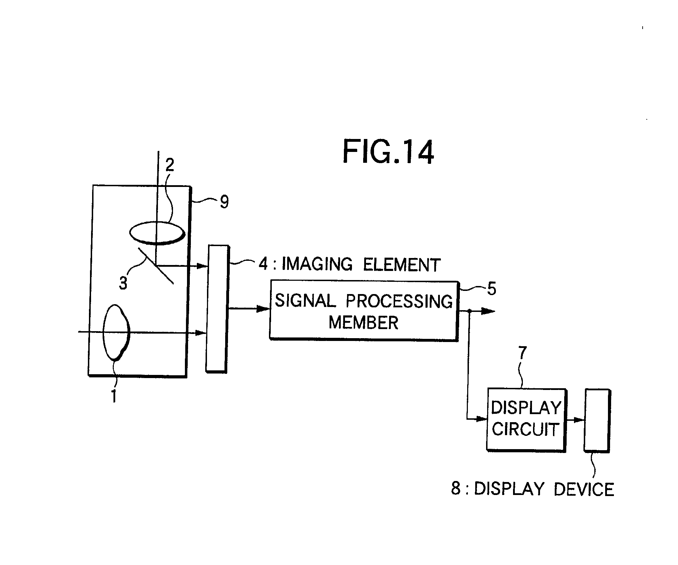

Next, a mobile terminal device according to an embodiment 4 of the present invention and an imaging device employed therein will be explained with reference to FIG.14 to FIG.16 hereunder. FIG.14 is a block diagram showing a configuration of an imaging device according to the embodiment 4. FIGS.15A and 15B are perspective views showing an external appearance of the imaging device shown in FIG.14, wherein FIG.15A shows a position of the holder 9 when the image is picked up via the first imaging lens 1 and FIG. 15B shows a position of the holder 9 when the image is picked up via the second imaging lens 2. In the imaging device according to the present embodiment, the image formed on the imaging surface 4e of the imaging element 4 is selected by moving the position of the holder 9 that holds the first imaging lens 1 and the second imaging lens 2 to switch the image displayed on the display portion 8. In FIG.14 and FIGS.15A and 15B, 22 is a moving member such as a shaft, etc. that holds the holder 9 and moves the position of the holder 9 such that either one of the images picked up via the first imaging lens 1 and the second imaging lens 2 is formed on the imaging surface 4e of the imaging element 4. In FIG.14 and FIGS.15A and 15B, the same symbols denote the same or equivalent portions and their detailed explanation will be omitted.

Next, an operation will be explained hereunder. In the imaging device according to the present embodiment, one of the images picked up via the first imaging lens 1 and the second imaging lens 2 is formed on the imaging surface 4e of the imaging element 4 by moving the position of the holder 9. If the image picked up via the first imaging lens 1 is selected, the holder 9 is slid to the position shown in FIG.15A along the moving member 22. Accordingly, the image picked up via the first imaging lens 1 can be formed on the imaging surface 4e of the imaging element 4. In contrast, if the image picked up via the second imaging lens 2 is selected, the holder 9 is slid to the position shown in FIG.15B along the moving member 22. Accordingly, the image picked up via the second imaging lens 2 can be formed on the imaging surface 4e of the imaging element 4. In this manner, the image formed on the imaging surface 4e of the imaging element 4 can be selected by moving the holder 9, and thus the image displayed on the display portion 8 can be switched by moving the holder 9.

In case the image picked up via one imaging lens is selected, the image picked up via the other imaging lens is not formed on the imaging surface 4e of the imaging element 4. Therefore, the situation that the images picked up via the first imaging lens 1 or the second imaging lens 2 interfere with each other can be prevented without fail. Also, the image picked up via either the first imaging lens 1 or the second imaging lens 2 is formed on the imaging surface 4e of the imaging element 4. Therefore, as shown in FIG.3 or FIG.4, provision of two reading areas 4b, 4d on the imaging surface 4e is not needed, and thus the overall imaging surface 4e can be used as a common imaging area of the first imaging lens 1 and the second imaging lens 2. Accordingly, the light shielding member 10, etc. can be omitted, and the imaging area can be set wider and the resolution of the display portion 8 can be much more improved. As described above, although the display screen of the display portion 8 provided to the mobile terminal device is relatively small, the clear image display can be achieved by the same size display screen by improving the resolution in this way.

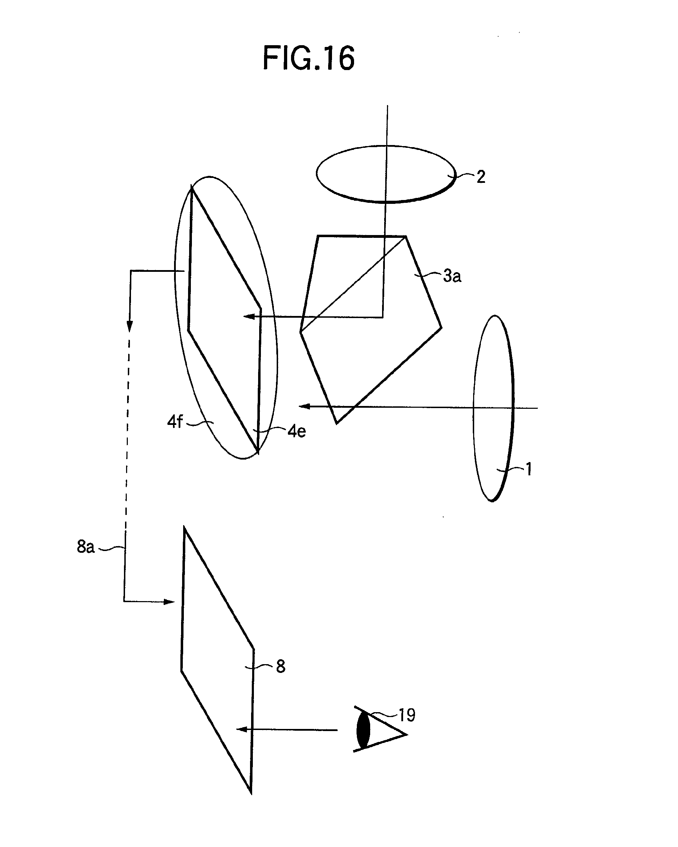

FIG.16 is a view showing schematically an arrangement relationship of the imaging device when the imaging device shown in FIG. 14 and FIGS. 15A and 15B is employed in the mobile terminal device. In FIG.16, the same symbols denote the same or equivalent portions. As shown in FIG.16, only one image 4f picked up via either the first imaging lens 1 or the second imaging lens 2 is formed on the imaging surface 4e of the imaging element 4. As described above, in the imaging device according to the embodiment 4, the overall imaging surface 4e can be used as the common imaging area of the first imaging lens 1 and the second imaging lens 2, and thus the imaging area can be set wider. Accordingly, the resolution of the display portion 8 can be further improved to attain the clear image display, and also the selecting member 6, the light shielding member, etc. can be omitted to attain the reduction in the size of the overall device. In the imaging device according to the present embodiment, the holder 9 for holding the first imaging lens 1 and the second imaging lens 2 is moved by the moving member 22. But the imaging element 4 may be moved with respect to the holder 9. In this case, the similar advantages mentioned above can also be achieved.

### (Embodiment 5)

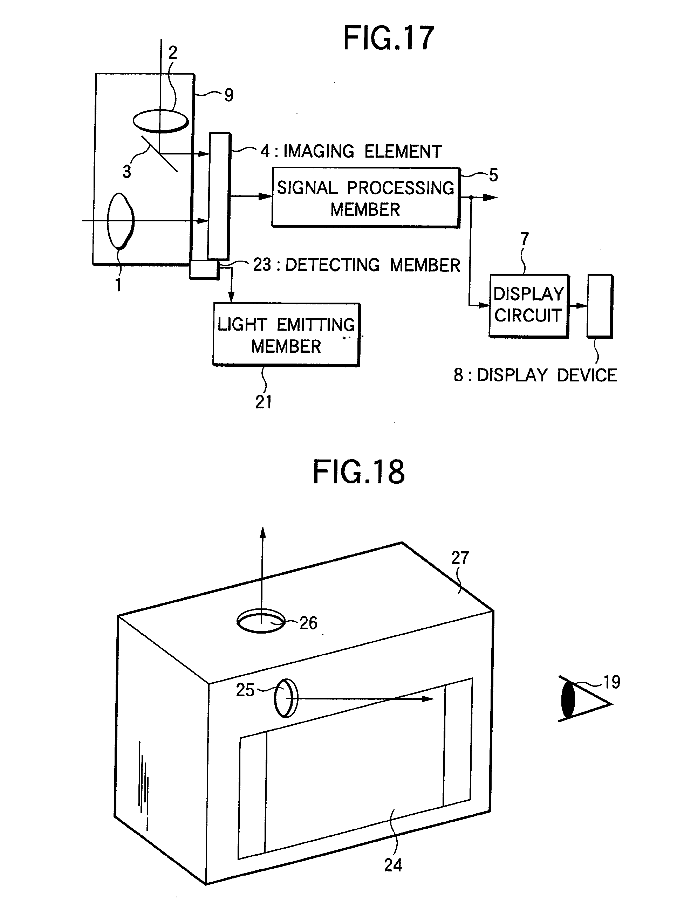

Next, a mobile terminal device according to an embodiment 5 of the present invention and an imaging device employed therein will be explained with reference to FIG.17 hereunder. FIG. 17 is a block diagram showing a configuration of an imaging device according to the embodiment 5, and an external appearance of the mobile terminal device in which the imaging device shown in FIG.17 is employed is shown in FIG.11. According to the imaging device of the present embodiment, in the mobile terminal device in the embodiment 4, a member for informing the subject side of the presence of the imaging when the image of the imaging object other than the user himself or herself is picked up is provided like the mobile terminal device in the embodiment 3. In FIG.17, 23 is a detecting member that detects the position of the holder 9 moved along the moving member 22 and outputs a detection signal to cause the light emitting member 21 to emit the light when the image is picked up via the second imaging lens 2. This detecting member 23 detects either the image picked up via the first imaging lens 1 is being formed on the imaging surface 4e or the image picked up via the second imaging lens 2 is being formed on the imaging surface 4e, by detecting the position of the holder 9. In FIG. 17, the same symbols denote the same or equivalent portions and their detailed explanation will be omitted.

A difference from the mobile terminal device according to the embodiment 3 resides in that the light emitting member 21 is controlled by the detection signal of the detecting member 23 that detects the position of the holder 9. This detecting member 23 detects surely the fact that the image is being picked up via the second imaging lens 2, and then causes the light emitting member 21 to emit the light. Accordingly, it is possible to cause the light emitting member 21 to emit the light only when the image is picked up via the second imaging lens 2, and the image picking-up state in the mobile terminal device can be checked from the outside. In addition, the person who is the imaging object is informed of the fact that his or her image is being picked up, and thus it is possible to avoid such a state that the image of the person who is the subject 20 is reluctantly picked up.

### (Embodiment 6)

Next, a mobile terminal device according to an embodiment 6 of the present invention will be explained with reference to FIG.18 and FIGS.19A and 19B hereunder. All the mobile terminal devices according to the above embodiments 2 to 5 assume the mobile telephone in which the imaging device is built, but the mobile terminal device employing the imaging device of the present invention is not limited to the mobile telephone. That is, the imaging device of the present invention may be employed in all devices that do not have the transmitting/receiving function if the devices are the small-size terminal device. For example, FIG.18 and FIGS. 19A and 19B show the case where the imaging device according to the present invention is employed in PDA that is called the palmtop computer, or the like.

FIG.18 is a perspective view showing an external appearance of a mobile terminal device according to an embodiment 6 of the present invention and a positional relationship to the user. FIGS.19A and 19B are views showing used states of the mobile terminal device according to the embodiment 6, wherein FIG.19A shows the used state when the image of the user 19 himself or herself is picked up and FIG. 19B shows the used state when the subject other than the user 19, more particularly the subject 20 at a position remote from the user 19 himself or herself, is picked up. As shown in FIG.18 and FIGS.19A and 19B, 24 is a transparent protection cover of the display portion 8; 25, a transparent protection cover of the first imaging lens 1; 26, a transparent protection cover of the second imaging lens 2; and 27, a PDA main body as the mobile terminal device main body. In this case, an arrangement of the imaging device in the mobile terminal device is similar to that shown in FIG. 9, and their illustration will be omitted.

As shown in FIGS.19A and 19B, if the user 19 picks up the image of the user himself or herself, the image picking-up state of the subject 20 (the user himself or herself) can be checked simultaneously with the imaging by picking up the image via the first imaging lens 1 provided on the surface on which the display portion 8 of the mobile terminal device main body 27 is arranged. Also, if the user 19 picks up the image of the subject 20, the image picking-up state of the subject 20 can be checked by the display portion 8 simultaneously with the imaging by picking up the image via the second imaging lens 2 which is arranged on the side surface portion of the mobile terminal device main body 27 (in the case of the mobile terminal device according to the present embodiment). In addition, the illumination light is easily irradiated onto the display portion 8 to make the display screen brighter, and thus the visibility of the display screen can be improved.

### [Advantages of the Invention]

As described above, according to the present invention, there are provided a first imaging lens and a second imaging lens whose image picking-up directions are different, a reflecting member for changing an optical path of an image picked up via one imaging lens such that image forming direction of the first imaging lens and the second imaging lens are set in a same direction, an imaging device having imaging surfaces on which images picked up via the first imaging lens and the second imaging lens are formed, a signal processing member for signal-processing an image signal that is converted into an electric signal by the imaging device, a display portion for displaying the image signal which is subjected to the signal processing by the signal processing member, and a selecting member for selecting the image signal corresponding to any one of the first imaging lens and the second imaging lens to display it on the display portion. Therefore, the reduction in size can be achieved and also the images can be picked up in plural directions without provision of the rotating mechanism, etc. Also, since either one of the images picked up via the first imaging lens and the second imaging lens is displayed on the display portion, the clear image display can be accomplished on the display portion.

Also, according to another invention, there are provided a first imaging lens and a second imaging lens whose image picking-up directions are different, a reflecting member for changing an optical path of an image picked up via one imaging lens such that image forming direction of the first imaging lens and the second imaging lens are set in a same direction, a holder for holding the first imaging lens and the second imaging lens and the reflecting member, an imaging device having imaging surfaces on which images picked up via the first imaging lens and the second imaging lens are formed, a signal processing member for signal- processing image signals of the first imaging lens and a second imaging lens, that are converted into electric signals by the imaging device, a display portion for displaying the image signals which are subjected to the signal processing by the signal processing member, and a moving member to which the holder is provided, for moving a position of the holder such that any one of images picked up via the first imaging lens and the second imaging lens is formed on an imaging surface of the imaging device. Therefore, the reduction in size can be achieved and also the images can be picked up in plural directions without provision of the rotating mechanism, etc. Also, the reading area of the image that is formed on the imaging surface can be provided wider, and the resolution of the display image displayed on the display portion can be improved, and the clear image display can be accomplished on the display portion.

Also, according to still another invention, there are provided a mobile terminal device main body having a display portion, a first imaging lens and a second imaging lens arranged on a front surface portion, on which the display portion is arranged, and a side surface portion of the mobile terminal device main body, for picking-up images positioned in mutually perpendicular directions, a reflecting member for reflecting an image picked up via the second imaging lens provided on the side surface portion to form the image in a same direction as the image picked up via the first imaging lens provided on the front surface portion, an imaging device having imaging surfaces on which images picked up via the first imaging lens and the second imaging lens are formed, a signal processing member for signal- processing an image signal that is converted into an electric signal by the imaging device, and a selecting member for selecting the image signal that is subjected to the signal processing member or a reading area on the imaging surface, that corresponds to the first imaging lens or the second imaging lens, to display any one of images picked up via the first imaging lens and the second imaging lens on the display portion. Therefore, the images can be picked up in plural directions without provision of the rotating mechanism, etc. Also, in case both images of the cameraman himself and the subject other than the cameraman are picked up, the image can be picked up while checking the image picking-up state displayed on the display portion, and also the clear image display on the display portion can be achieved.

Also, according to yet still another invention, there are provided a mobile terminal device main body having a display portion, a first imaging lens and a second imaging lens arranged on a front surface portion, on which the display portion is arranged, and a side surface portion of the mobile terminal device main body, for picking-up images positioned in mutually perpendicular directions, a holder for holding the first imaging lens and the second imaging lens, an imaging device having imaging surfaces on which images picked up via the first imaging lens and the second imaging lens are formed, a signal processing member for signal-processing image signals of the first imaging lens and a second imaging lens, that are converted into electric signals by the imaging device, a display portion for displaying the image signals which are subjected to signal processing by the signal processing member, and a moving member to which the holder is provided, for moving a position of the holder such that any one of images picked up via the first imaging lens and the second imaging lens is formed on an imaging surface of the imaging device. Therefore, in case both images of the cameraman himself and the subject other than the cameraman are picked up, the image can be picked up while checking the image picking-up state displayed on the display portion, and the reading area of the image that is formed on the imaging surface can be provided wider, and also the clear image display on the display portion can be achieved.

## Claims

1. An imaging device comprising:
a first imaging lens and a second imaging lens whose image picking-up directions are different;
a reflecting member for changing an optical path of an image picked up via one imaging lens such that image forming direction of said first imaging lens and said second imaging lens are set in a same direction;
an imaging device having imaging surfaces on which images picked up via said first imaging lens and said second imaging lens are formed;
a signal processing member for signal-processing an image signal that is converted into an electric signal by said imaging device;
a display portion for displaying the image signal which is subjected to the signal processing by said signal processing member; and
a selecting member for selecting the image signal corresponding to any one of said first imaging lens and said second imaging lens to display thereof on said display portion.

2. The imaging device according to claim 1, wherein
said selecting member selects the image signal to be displayed on said display portion by designating reading areas, that correspond to said first imaging lens and said second imaging lens, on said imaging surfaces.

3. An imaging device comprising:
a first imaging lens and a second imaging lens whose image picking-up directions are different;
a reflecting member for changing an optical path of an image picked up via one imaging lens such that image forming direction of said first imaging lens and said second imaging lens are set in a same direction;
a holder for holding said first imaging lens and said second imaging lens and said reflecting member;
an imaging device having imaging surfaces on which images picked up via said first imaging lens and said second imaging lens are formed;
a signal processing member for signal-processing image signals of said first imaging lens and said second imaging lens, that are converted into electric signals by said imaging device;
a display portion for displaying the image signals which are subjected to the signal processing by said signal processing member; and
a moving member to which said holder is provided, for moving a position of said holder such that any one of images picked up via said first imaging lens and said second imaging lens is formed on an imaging surface of said imaging device.

4. The imaging device according to any one of claims 1 to 3, further comprising:
a light shielding member for shielding optical paths of said first imaging lens and said second imaging lens provided on the imaging surface.

5. The imaging device according to any one of claims 1 to 3, further comprising:
an infrared cutting filter provided between said first imaging lens and said second imaging lens and the imaging surfaces of said imaging element.

6. A mobile terminal device comprising:
a mobile terminal device main body having a display portion;
a first imaging lens and a second imaging lens arranged on a front surface portion, on which said display portion is arranged, and a side surface portion of said mobile terminal device main body, for picking-up images positioned in mutually perpendicular directions;
a reflecting member for reflecting an image picked up via said second imaging lens provided on the side surface portion to form the image in a same direction as the image picked up via said first imaging lens provided on the front surface portion;
an imaging device having imaging surfaces on which images picked up via said first imaging lens and said second imaging lens are formed;
a signal processing member for signal-processing an image signal that is converted into an electric signal by said imaging device; and
a selecting member for selecting the image signal that is subjected to said signal processing member or a reading area on the imaging surface, that corresponds to said first imaging lens or said second imaging lens, to display any one of images picked up via said first imaging lens and said second imaging lens on said display portion.

7. A mobile terminal device comprising:
a mobile terminal device main body having a display portion;
a first imaging lens and a second imaging lens arranged on a front surface portion, on which said display portion is arranged, and a side surface portion of said mobile terminal device main body, for picking-up images positioned in mutually perpendicular directions;
a holder for holding said first imaging lens and said second imaging lens;
an imaging device having imaging surfaces on which images picked up via said first imaging lens and said second imaging lens are formed;
a signal processing member for signal-processing image signals of said first imaging lens and a second imaging lens, that are converted into electric signals by said imaging device;
a display portion for displaying the image signals which are subjected to signal processing by said signal processing member; and
a moving member to which said holder is provided, for moving a position of said holder such that any one of images picked up via said first imaging lens and said second imaging lens is formed on an imaging surface of said imaging device.

8. The mobile terminal device according to claim 6 or 7, further comprising:
a light emitting member for emitting a light in an imaging direction of said second imaging lens, and
an operating member for causing said light emitting member to emit a light when the image is picked up via said second imaging lens.

9. The mobile terminal device according to claim 6 or 7, wherein
an imaging angle of view of said first imaging lens is set wider than an imaging angle of view of said second imaging lens.

10. The mobile terminal device according to claim 6 or 7, further comprising:
a transmitting/receiving member for transmitting/receiving the image signal, that is subjected to signal processing by said signal processing member, to other device via a radio transmission.
